# EUROPEAN PATENT APPLICATION

(11) **EP 4 462 559 A2**
(43) Date of publication of application: **13.11.2024**
(21) Application number: 24173094.4
(22) Date of filing: 29.04.2024
(51) Int. Cl.: H01M 50/204, H01M 50/258

(54) **INTER-MODULE CONNECTION STRUCTURE AND ENERGY STORAGE POWER SUPPLY**

(30) Priority: 09.05.2023 CN 202321108030 U
(71) Applicant: Ninebot New Energy Technology (Beijing) Co., Ltd., Beijing 100192 (CN)
(72) Inventor: MING, Naifeng, Beijing, 100192 (CN); WEI, Wei, Beijing, 100192 (CN); LU, Jian, Beijing, 100192 (CN)
(74) Representative: J A Kemp LLP

(57) **Abstract**

The present disclosure discloses an inter-module connection structure and an energy storage power supply, where the inter-module connection structure includes a first component, a second component and a connecting component, where the first component is provided with a first connecting part, the second component is provided with a second connecting part, the first connecting part and the second connecting part are fitted in plug-in or lap manner, the connecting component passes through the first connecting part and the second connecting part to connect and fix the first component and the second component, and the first component and the second component, when in use, are constructed as a force-bearing component for bearing an acting force along a shear direction of the connecting component. A connection by the inter-module connection structure of the present disclosure is firm and reliable, and is not easy to get loose, thereby ensuring the safety of connection between modules.

## Description

### TECHNICAL FIELD

The present disclosure relates to the technical field of power supply, and in particular, an inter-module connection structure and an energy storage power supply.

### BACKGROUND

In order to meet the diverse use requirements in different scenarios, some studies have proposed a design concept of an energy storage power supply that is capable of capacity expansion, such energy storage power supply can cascade multiple battery packs together, thereby achieving the requirements of adjusting battery capacity. However, in related technologies, the cascading connection between battery packs has the problems such as easy to get loose, unstable, and poor safety, reducing the safety of use of energy storage power supply.

### SUMMARY

The present disclosure aims to solve one of the technical problems in the related technologies at least to a certain extent.

Therefore, an embodiment of the present disclosure provides an inter-module connection structure. A connection by the inter-module connection structure is firm and reliable, and is not easy to get loose, thereby ensuring the safety of the connection between modules.

An embodiment of the present disclosure also provides an energy storage power supply including the above-mentioned inter-module connection structure.

The inter-module connection structure of an embodiment of the present disclosure includes:
a first component and a second component, where the first component is provided with a first connecting part, the second component is provided with a second connecting part, the first connecting part and the second connecting part are fitted together in plug-in or lap manner; and
a connecting component, where the connecting component passes through the first connecting part and the second connecting part to connect and fix the first component and the second component, and the first component and the second component, when in use, are constructed as a force-bearing component for bearing an acting force along a shear direction of the connecting component.

A connection by the inter-module connection structure of an embodiment of the present disclosure is firm and reliable, and is not easy to get loose, thereby ensuring the safety of the connection between modules.

In some embodiments, the first component is provided with a first support part, the first support part is configured to stop against an end of the second connecting part to achieve a top support between the first component and the second component;
and/or, the second component is provided with a second support part, the second support part is configured to stop against an end of the first connecting part to achieve a top support between the first component and the second component.

In some embodiments, the first component is provided with a plurality of first connecting parts spaced apart, the second component is provided with a plurality of second connecting parts spaced apart, the plurality of first connecting parts are fitted in one-to-one correspondence to the plurality of second connecting parts in plug-in or lap manner;
or,
the first component is provided with one first connecting part, the first connecting part extends for a set length along a length direction of a joint between the first component and the second component, and is located in a middle part along the length direction of the joint, the second component is provided with one second connecting part, the first connecting part is fitted correspondingly to the second connecting part in plug-in or lap manner.

In some embodiments, the first connecting part is a groove, the second connecting part is a bulge part, and the bulge part is fitted to the groove in a plug-in manner.

In some embodiments, the groove includes a first groove wall and a second groove wall arranged opposite to the first groove wall, the first groove wall is provided with a first hole, the second groove wall is provided with a second hole, and the connecting component passes through the first hole and the second hole and is fitted to at least one of the first hole and the second hole in threaded connection manner.

In some embodiments, the first groove wall is located outside the first component, the second groove wall is located inside the first component, and an aperture of the first hole is greater than an aperture of the second hole, so that the connecting component passes through the first hole and the second hole successively.

In some embodiments, the connecting component has a connecting rod part and an end head part, a radial dimension of the end head part is greater than a radial dimension of the connecting rod part, the connecting rod part passes through the second connecting part and is fitted into the second hole, and the end head part is embedded in the first hole.

In some embodiments, the second connecting part is provided with a third hole, the third hole is a taper hole, the end head part includes a taper segment, and the taper segment is fitted into the third hole.

In some embodiments, the connecting rod part includes a first rod segment and a second rod segment, the second hole includes a first hole segment and a second hole segment, the second hole segment is located between the first hole segment and the second connecting part, a hole wall of the first hole segment is provided with a thread, a hole wall of the second hole segment is a smooth hole wall, the first rod segment is fitted into first hole segment in threaded connection manner, and the second rod segment is fitted into the second hole segment in a plug-in manner.

In some embodiments, a radial dimension of the second hole segment is greater than a radial dimension of the first hole segment, and a radial dimension of the second rod segment is greater than a radial dimension of the first rod segment.

In some embodiments, a cross-sectional dimension of the bulge part gradually increases along a direction adjacent to the second component;
and/or, a width dimension of the groove gradually decreases along a direction of a depth of the groove.

In some embodiments, an inner side of an end of at least one groove wall of the groove is an inclined surface or a curved surface; and/or, at least one side of an end of the bulge part is an inclined surface or a curved surface.

The energy storage power supply of an embodiment of the present disclosure includes a plurality of modules and the inter-module connection structure according to any one of the embodiments, the plurality of modules are arranged in a stacked manner, and any two adjacent modules are connected by the inter-module connection structure.

In some embodiments, the plurality of modules include at least one power management module and at least one battery module.

In some embodiments, the modules include a side shell, a material of the side shell is a metal, and a side shell of one of two adjacent modules forms the first component, and a side shell of the other of them forms the second component.

In some embodiments, one module of two adjacent modules is provided with a raised area in a middle part of a surface thereof at a connecting side of the two adjacent modules, and the other module is provided with a recessed area in a middle part of surface thereof at the connecting side, and the raised area is embedded in the recessed area to achieve a pre-positioning between the two adjacent modules.

In some embodiments, at least part of a wall of the recessed area near its opening is an inclined surface; and/or, at least part of a surface of the raised area near its end is an inclined surface.

### BRIEF DESCRIPTION OF DRAWINGS

FIG 1 is a sectional schematic diagram of an inter-module connection structure of an embodiment of the present disclosure.
FIG 2 is a sectional schematic diagram of a first component in FIG 1.
FIG 3 is a sectional schematic diagram of a second component in FIG 1.
FIG 4 is a sectional schematic diagram of a connecting component in FIG 1.
FIG 5 is a stereoscopic schematic diagram of a second component in FIG 1.
FIG 6 is a stereoscopic schematic diagram of an energy storage power supply of an embodiment of the present disclosure.
FIG 7 is a stereoscopic schematic diagram of an energy storage power supply of another embodiment of the present disclosure.
FIG 8 is an exploded schematic diagram of the energy storage power supply in FIG 6.
FIG 9 is a sectional schematic diagram of the energy storage power supply in FIG 6 at A-A.
FIG 10 is a bottom schematic diagram of a power management module in FIG 8.
FIG 11 is a stereoscopic schematic diagram of a battery module in FIG. 8.

Description of reference numbers:
inter-module connection structure 100;
first component 1; first connecting part 11; first groove wall 111; second groove wall 112; first hole 113; second hole 114; first hole segment 1141; second hole segment 1142; first guide surface 115; first support part 12;
second component 2; second connecting part 21; third hole 211; second guide surface 212; second support part 22;
connecting component 3; connecting rod part 31; first rod segment 311; second rod segment 312; end head part 32; taper segment 321;
module 200; power management module 201; first side shell 2011; raised area 2012; third guide surface 2013; battery module 202; second side shell 2021; recessed area 2022; fourth guide surface 2023.

### DESCRIPTION OF EMBODIMENTS

Embodiments of the present disclosure are described in detail below, and examples of the embodiments are shown in the accompanying drawings. The embodiments described below with reference to the accompanying drawings are illustrative and are intended to explain the present disclosure and shall not be understood as limitations of the present disclosure.

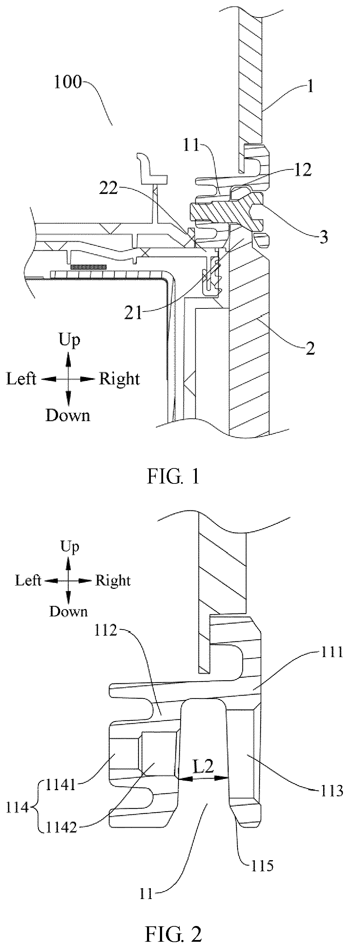

As shown in FIG 1, an inter-module connection structure 100 of an embodiment of the present disclosure includes a first component 1, a second component 2 and a connecting component 3.

The first component 1 is provided with a first connecting part 11, the second component 2 is provided with a second connecting part 21, and the first connecting part 11 and the second connecting part 21 are fitted in plug-in or lap manner. For example, as shown in FIG 1, both the first component 1 and the second component 2 can be a plate-shaped structure, where the first component 1 can be located above the second component 2. One of the first connecting part 11 and the second connecting part 21 can be a hole-shaped structure, and the other of them can be a raised structure. When assembling, the second connecting part 21 can be inserted into the first connecting part 11, thereby realizing a plug-in fit between the first component 1 and the second component 2.

In some other embodiments, both the first connecting part 11 and the second connecting part 21 can be a raised structure, where the first connecting part 11 and the second connecting part 21 can be superimposed in a left and right direction, thereby realizing a lap fit between the first component 1 and the second component 2.

The connecting component 3 passes through the first connecting part 11 and the second connecting part 21 to connect and fix the first component 1 and the second component 2, and the first component 1 and the second component 2, when in use, are constructed as a force-bearing component for bearing an acting force along a shear direction of the connecting component 3.

For example, as shown in FIG 1, the connecting component 3 can be a screw, a bolt, a pin or the like, the connecting component 3 can extend along a left and right direction and can pass through both the first connecting part 11 and the second connecting part 21, and thus, the first connecting part 11 and the second connecting part 21 can be connected and fixed by means of the connecting component 3.

It should be noted that the shear direction of the connecting component 3 is a transverse direction of the connecting component 3, and specifically can be regarded as an up and down direction in FIG 1. In a process of using, the connecting component 3 can withstand a shear action of the first component 1 and the second component 2 in the up and down direction. Furthermore, the first component 1 and the second component 2, when in use, are also used as force-bearing component, that is, a structural strength of the first component 1 and the second component 2 should meet a use requirement for pulling in the up and down direction.

In the inter-module connection structure 100 of an embodiment of the present disclosure, a connecting manner of the connecting component 3 is reliable and stable, avoiding the problems of weak connection and easy loosening existed in clamping and simple stacking manners used in related technologies, and thus ensuring the safety of connection between modules 200.

Furthermore, the plug-in or lap fit between the first connecting part 11 and the second connecting part 21 can play a role in mutual blocking and limiting, thereby ensuring the structural stability and compactness of the connection between different modules 200.

In addition, the first component 1 and the second component 2, when in use, can be used as a force-bearing component, that is, the first component 1 and the second component 2 can withstand a great tensile force in a direction perpendicular to the connecting component 3, and some heavy items such as battery pack can be connected with the first component 1 and the second component 2, to meet the use requirements of structural strength for pulling, so that the connecting structure between the modules 200 can withstand a large gravity pulling, further ensuring the safety of use.

In some embodiments, the first component 1 is provided with a first support part 12, the first support part 12 is configured to stop against an end of the second connecting part 21 to achieve a top support between the first component 1 and the second component 2.

For example, as shown in FIG 1, the first support part 12 can be integrally provided on the first component 1, and the first support part 12 can be specifically provided on a step and other structure of the first component 1. When the first component 1 and the second component 2 are connected by the connecting component 3, the first support part 12 can stop against a top end of the second connecting part 21, so that the first component 1 can be supported by the second connecting part 21 in the up and down direction, meeting a use requirement for stacking a load in the up and down direction.

In some embodiments, the second component 2 is provided with a second support part 22, the second support part 22 is configured to stop against an end of the first connecting part 11 to achieve a top support between the first component 1 and the second component 2.

For example, as shown in FIG 1, the second support part 22 can be integrally provided on the second component 2, and the second support part 22 can be specifically provided on a step and other structure of the second component 2. When the first component 1 and the second component 2 are connected by the connecting component 3, the second support part 22 can stop against a bottom end of the first connecting part 11, meeting the use requirement of the first component 1 and the second component 2 for stacking a load in the up and down direction.

In some embodiments, the first component 1 is provided with a plurality of first connecting parts 11 spaced apart, the second component 2 is provided with a plurality of second connecting parts 21 spaced apart, and the plurality of first connecting parts 11 are fitted in one-to-one correspondence to the plurality of second connecting parts 21 in plug-in or lap manner.

For example, a bottom side of the first component 1 can be provided with two, three, four, or other number of first connecting parts 11, and a top side of the second component 2 can be provided correspondingly with two, three, four, or other number of second connecting parts 21. When assembling, the plurality of first connecting parts 11 can be fitted in one-to-one correspondence to the plurality of second connecting parts 21 in plug-in or lap manner.

By virtue of the fitting between the plurality of first connecting parts 11 and the plurality of second connecting parts 21, on the one hand, a limiting constraint effect between the first component 1 and the second component 2 can be enhanced, thereby ensuring the compactness and stability of the connection, and on the other hand, a structural strength of the connection between the first component 1 and the second component 2 can be enhanced, thereby meeting a use requirement for force-bearing.

In some embodiments, the first component 1 is provided with one first connecting part 11, the first connecting part 11 extends for a set length along a length direction of a joint between the first component 1 and the second component 2, and is located in a middle of the joint in a length direction, the second component 2 is provided with one second connecting part 21, the first connecting part 11 is fitted correspondingly to the second connecting part 21 in plug-in or lap manner.

For example, a bottom side of the first component 1 can be provided with only one first connecting part 11, the first connecting part 11 can extend along an extension direction (front and rear direction, i.e., length direction of the joint) of an edge of a bottom side of the first component 1, and the first connecting part 11 is roughly located at a middle position of the first component 1 in the front and rear direction.

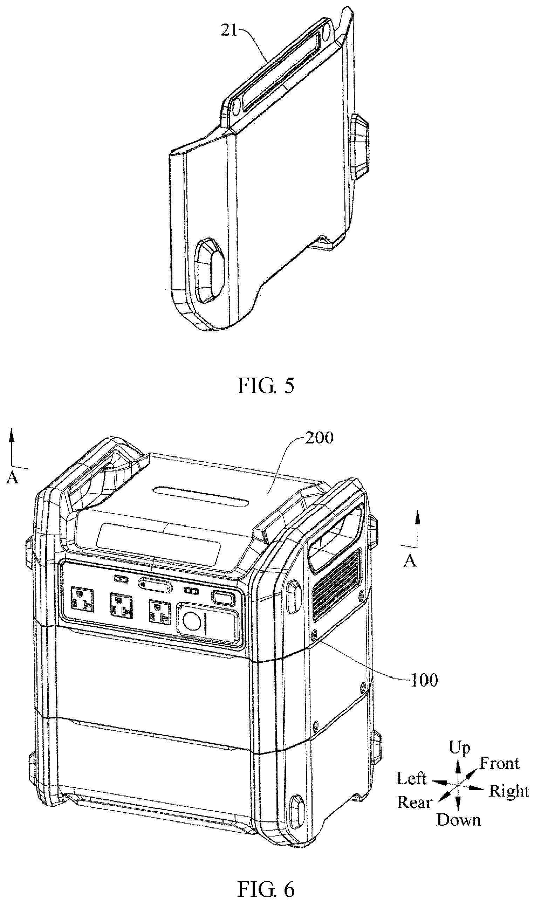

Correspondingly, as shown in FIG 5, a top side of the second component 2 can be provided with only one second connecting part 21, the second connecting part 21 can extend along an extension direction(front and rear direction, that is, length direction of the joint) of an edge of a top side of the second component 2, and the second connecting part 21 is roughly located at a middle position of the second component 2 in the front and rear direction.

When the first component 1 and the second component 2 are installed, the first connecting part 11 and the second connecting part 21 are fitted together in plug-in or lap manner, and since both the first connecting part 11 and the second connecting part 21 have a certain length dimension, thereby ensuring the limiting effect and the structural strength of the connection.

Optionally, as shown in FIG 5, the first connecting part 11 and the second connecting part 21 can be provided with the same number of through-hole, the through-hole is used for allowing the connecting component 3 to pass therethrough, so that the first connecting part 11 and the second connecting part 21 can be connected and fixed by multiple connecting components 3 at the same time, thereby ensuring the strength and stability of the connection.

In some embodiments, as shown in FIG 5, a middle part of the second connecting part 21 can be provided with a long-hole, the long-hole extends roughly along the front and rear direction, and the second connecting part 21 is provided two through-holes for the connecting component 3 to pass therethrough, and the two through-holes are respectively located on front and rear sides of the long-hole. The setting of the long-hole can, on one hand, play a role in reducing consumables, which is conducive to reducing cost, and on the other hand, can enhance the elastic performance of the second connecting part 21, thereby meeting the use requirement for certain elastic deformation.

Similarly, a middle part of the first connecting part 11 can also be provided with a long-hole, which will not be repeated here.

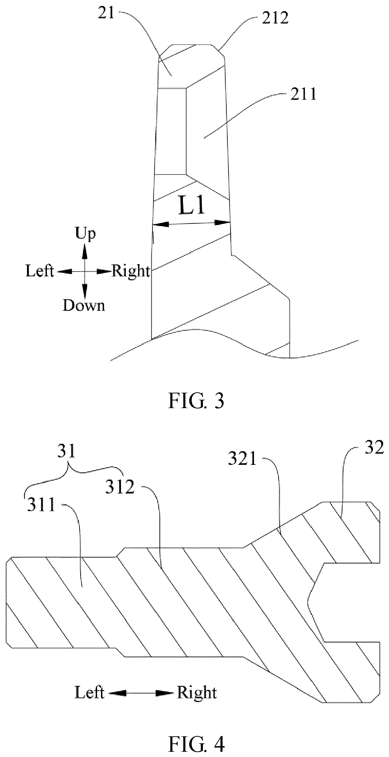

In some embodiments, as shown in FIG 2, the first connecting part 11 is a groove, an opening of the groove can be downward, and a groove depth direction of the groove is generally in an up and down direction. As shown in FIG 3, the second connecting part 21 is a bulge part, and the bulge part can be integrally provided on a top of the second component 2. When in use, the bulge part is fitted to the groove in a plug-in manner, thereby facilitating a plug-in assembly between the first component 1 and the second component 2.

In some embodiments, the groove includes a first groove wall 111 and a second groove wall 112 opposite to the first groove wall 111, the first groove wall 111 is provided with a first hole 113, the second groove wall 112 is provided with a second hole 114, and the connecting component 3 passes through the first hole 113 and the second hole 114, and is threaded into at least one of the first hole 113 and the second hole 114.

For example, as shown in FIG 2, the first groove wall 111 and the second groove wall 112 can be spaced apart and arranged opposite to each other in the left and right direction, the first groove wall 111 can be disposed on a right side of the groove, and the second groove wall 112 can be disposed on a left side of the groove. The first groove wall 111 can be provided with a first hole 113, the first hole 113 can run through the first groove wall 111 substantially along the left and right direction, the second groove wall 112 can be provided with a second hole 114, the second hole 114 can also run through the second groove wall 112 substantially along the left and right direction.

One of the first hole 113 and the second hole 114 can be a threaded hole, for example, the first hole 113 can be a through-hole and the second hole 114 can be a threaded hole. When assembling, the connecting component 3 can pass through the first hole 113 and threaded in the threaded hole, thereby facilitating the installation and fixing of the connecting component 3.

In some embodiments, the first groove wall 111 is located outside the first component 1, the second groove wall 112 is located inside the first component 1, and an aperture of the first hole 113 is greater than an aperture of the second hole 114, so as to facilitate the connecting component 3 to pass through the first hole 113 and the second hole 114 successively.

For example, as shown in FIG 2, the first groove wall 111 can be provided on a right side of the second groove wall 112, and both the first hole 113 on the first groove wall 111 and the second hole 114 on the second groove wall 112 can be a circular hole, where a diameter of the first hole 113 is greater than a diameter of the second hole 114. When assembling, the connecting component 3 can pass through the first hole 113 and the second hole 114 from the right side in sequence, and the larger aperture of the first hole 113 facilitates the installation and assembly of the connecting component 3.

In some embodiments, the connecting component 3 has a connecting rod part 31 and an end head part 32, and a radial dimension of the end head part 32 is greater than a radial dimension of the connecting rod part 31, and as shown in FIG 4, the connecting rod part 31 and the end head part 32 can be roughly cylindrical, where a diameter of the end head part 32 is greater than a diameter of the connecting rod part 31. When assembling, the connecting rod part 31 passes through the second connecting part 21 and is fitted to the second hole 114, and the end head part 32 is embedded in the first hole 113.

The end head part 32 can play a blocking constraint effect, thereby limiting an assembly depth of the connecting component 3, thereby ensuring the precision and accuracy of the assembly.

In some embodiments, as shown in FIG 3, the second connecting part 21 is provided with a third hole 211, the third hole 211 is a taper hole, i.e., an aperture of the second hole 114 can be gradually reduced in a direction from right to left. As shown in FIG 4, the end head part 32 includes a taper segment 321, which can be integrally provided on the end head part 32, and a radial dimension of the taper segment 321 can be gradually reduced in a direction from right to left.

When in use, as shown in FIG 1, the taper segment 321 is fitted to the third hole 211 of the second connecting part 21 in a plug-in manner. By virtue of the fitting between the taper segment 321 and the third hole 211, on one hand, a guiding positioning effect can be realized, that is, it is convenient to correct an axis of the connecting component 3 to a position where it coincides with an axis of the third hole 211, thereby ensuring the accuracy of the assembly; on the other hand, because the taper segment 321 is thicker than the connecting rod part 31, a shear strength at a fitting position between the second connecting part 21 and the connecting component 3 can be ensured, thereby fully meeting a use requirement for force-bearing.

In some embodiments, as shown in FIG 4, the connecting rod part 31 includes a first rod segment 311 and a second rod segment 312, the first rod segment 311 can be integrally connected to a left side of the second rod segment 312, and a diameter of the first rod segment 311 can be slightly less than a diameter of the second rod segment 312.

As shown in FIG 2, the second hole 114 includes a first hole segment 1141 and a second hole segment 1142, and the second hole segment 1142 is located between the first hole segment 1141 and the second connecting part 21, where a hole wall of the first hole segment 1141 is provided with a thread, that is, the first hole segment 1141 is a threaded hole, and the second hole segment 1142 has a smooth hole wall, that is, the second hole segment 1142 is a through-hole.

When assembling the connecting component 3, the first rod segment 311 can be fitted to the first hole segment 1141 in a threaded connection manner, thereby facilitating the installation and positioning of the connecting component 3, and the second rod segment 312 can be fitted to the second hole segment 1142 in a plug-in manner. By changing the radial dimensions of the first rod segment 311 and the second rod segment 312, and changing the diameters of the first hole segment 1141 and the second hole segment 1142, the limiting effect between the connecting component 3 and the second groove wall 112 of the first connecting part 11 can be enhanced, thereby ensuring the compactness of the assembly.

In some embodiments, a radial dimension of the second hole segment 1142 is greater than a radial dimension of the first hole segment 1141, and a radial dimension of the second rod segment 312 is greater than a radial dimension of the first rod segment 311. Thus, by virtue of the second rod segment 312, the use requirement of a shear strength between the connecting component 3 and the first connecting part 11 can be fully ensured.

In some embodiments, a cross-sectional dimension of the bulge part gradually increases along a direction adjacent to the second component 2. For example, as shown in FIG 3, the cross-sectional dimension of the bulge part can be a dimension L1, and the dimension L1 can gradually increase along a direction from top to bottom (direction adjacent to the second component 2). Thus, after the bulge part is inserted into the groove, a wider part of the bulge part can be fully fitted with the groove, thereby ensuring the compactness of the assembly.

In some embodiments, a groove width dimension of the groove gradually decreases along a depth direction of the groove. As shown in FIG 2, the groove width dimension of the groove can be a dimension L2, the dimension L2 can gradually decrease in a direction from bottom to top (depth direction of the groove). In this way, a dimension of an opening of the groove is larger, thereby facilitating the insertion of the bulge part. Furthermore, by virtue of change of the groove width dimension of the groove, it can play a guiding positioning effect, thereby ensuring the accuracy of the assembly.

In some embodiments, an inside of an end of at least one groove wall of the groove is an inclined surface or a curved surface. For example, as shown in FIG 2, an inner wall of the opening of the groove can be provided with two first guide surfaces 115 arranged opposite to each other in the left and right direction, each first guide surface 115 can be an inclined surface or a curved surface. The setting of the first guide surface 115 can increase a width of the opening of the groove, so as to facilitate insertion of the bulge part, and can also play a guiding positioning effect.

In some embodiments, at least one side of an end of the bulge part is an inclined surface or a curved surface. For example, as shown in FIG 3, a top of the bulge part can be provided with two second guide surfaces 212 arranged opposite to each other in the left and right direction, each second guide surface 212 can also be an inclined surface or a curved surface. The setting of the second guide surface 212 can decrease a dimension of the top of the bulge part, so as to facilitate insertion of the bulge part into the groove and avoid a situation where an edge of the top of the bulge part is easy to block and interfere with the inner wall of the groove, and can play a certain avoidance effect in a process of insertion.

An energy storage power supply of an embodiment of the present disclosure is described below.

An energy storage power supply of an embodiment of the present disclosure includes a plurality of modules 200 and the inter-module connection structure 100 according to any one of embodiments as described above. As shown in FIG 6, the plurality of modules 200 can be stacked successively in an up and down direction, and any two adjacent modules 200 can be connected by the inter-module connection structure 100, thereby ensuring a structural strength of the connection between the modules 200, and meeting the use requirements of lifting and carrying heavy objects, and thus ensuring the safety of use.

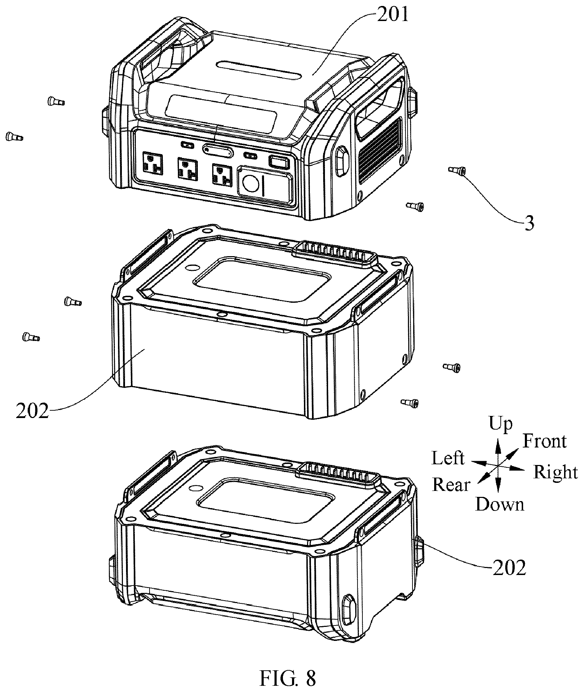

In some embodiments, the plurality of modules 200 include at least one power management module 201 and at least one battery module 202. For example, as shown in FIGS. 6 and 8, the power management module 201 can specifically be an inverter, and the battery module 202 can be a battery pack. It may be that only one power management module 201 is provided, and two battery modules 202 are provided, the power management module 201 can be fixed above the two battery modules 202, and the power management module 201 and the battery module 202 can be connected together and fixed by the inter-module connection structure 100. The two battery modules 202 can also be stacked in the up and down direction and can also be connected together and fixed by the inter-module connection structure 100.

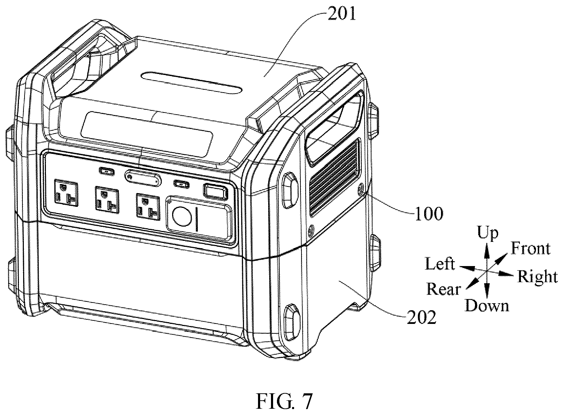

In some other embodiments, as shown in FIG 7, it may be that only one power management module 201 is provided, and only one battery module 202 is provided, and the power management module 201 can be connected and fixed above the battery module 202 by the inter-module connection structure 100.

In some embodiments, the modules 200 include a side shell, a material of the side shell is a metal, and a side shell of one of two adjacent modules forms the first component 1, and a side shell of the other of them forms the second component 2.

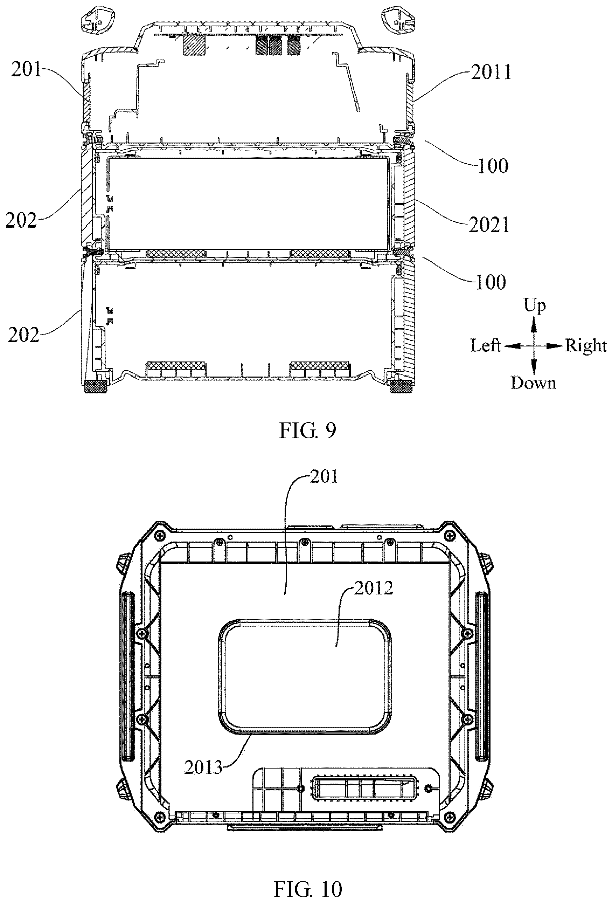

For example, as shown in FIG 9, each modules 200 can include two side shells arranged opposite to each other in the left and right direction, where a side shell of the power management module can be referred to as a first side shell 2011, and a side shell of the battery module 202 can be a second side shell 2021. Materials of both the first side shell 2011 and the second side shell 2021 can be a metal, and specifically can be stainless steel, copper, etc.

When the power management module 201 is installed above the battery module 202, the first side shell 2011 can form the first component 1 of the inter-module connection structure 100, the second side shell 2021 can form the second component 2 of the inter-module connection structure 100, and the first side shell 2011 and the second side shell 2021 on a corresponding side (left side or right side) can be connected and fixed by the connecting component 3.

In some other embodiments, as shown in FIG 9, when two battery modules 202 are stacked in an up and down direction, the second side shell 2021 of the upper battery module 202 can form the first component 1, and the second side shell 2021 of the lower battery module 202 can form the second component 2, and the second side shells 2021 of the two battery modules 202 on a corresponding side (left side or right side) can be connected and fixed by the connecting component 3.

In some embodiments, one module 200 of two adjacent modules 200 is provided with a raised area 2012 in a middle part of a surface thereof at a connecting side of the two adjacent modules, and the other module 200 of them is provided with a recessed area 2022 in a middle part of a surface thereof at the connecting side, and the raised area 2012 is embedded in the recessed area 2022 to achieve a pre-positioning between the two adjacent modules 200.

For example, two adjacent modules 200 can be stacked in an up and down direction, where the raised area 2012 can be disposed on a bottom side of the upper module 200, and specifically can be integrally disposed on a bottom cover of the upper module 200. As shown in FIG 10, the raised area 2012 can be roughly rectangular and protrude towards a lower side of the module 200. The raised area 2012 can be formed by stamping.

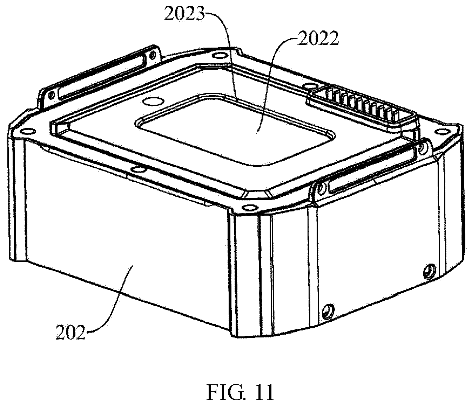

As shown in FIG 11, the recessed area 2022 can be disposed on the lower module 200, and specifically can be disposed on a top of the lower module 200, and the recessed area 2022 can be a downward recessed rectangular trough.

When assembling two adjacent modules 200, a corresponding raised area 2012 can first be inserted into a corresponding recessed area 2022, and by the fitting between the raised area 2012 and the recessed area 2022, a pre-positioning between the two adjacent modules 200 can be realized, and then the side shells of the two adjacent modules 200 can be connected and fixed by using the inter-module connection structure 100. The pre-positioning of the raised area 2012 and the recessed area 2022 facilitates the alignment of the first hole 113 with the second hole 114, thereby facilitating the passing of the connecting component 3 for positioning.

It is understood that in some other embodiments, the raised area 2012 can also be provided on the lower module 200, and the recessed area 2022 is provided on the upper module 200.

In some embodiments, at least part of a surface of the raised area 2012 near an end is an inclined surface. For example, as shown in FIG 10, a circumferential edge of the raised area 2012 is provided with a ring of a third guide surface 2013, the third guide surface 2013 is an inclined surface and is closed in a circle along a circumference of the raised area 2012. The setting of the third guide surface 2013 makes a cross-sectional dimension of the raised area 2012 gradually decrease along a direction away from the module 200, thereby facilitating insertion of the raised area 2012 into the recessed area 2022.

In some embodiments, at least part of a wall of the recessed area 2022 near an opening thereof is an inclined surface. For example, as shown in FIG 11, an inner wall of the recessed area 2022 is provided with a fourth guide surface 2023, the fourth guide surface 2023 is an inclined surface and is closed in a circle along a circumference of the recessed area 2022. The setting of the fourth guide surface 2023 makes a cross-sectional dimension of the recessed area 2022 gradually decrease along a direction close to the module 200, so that the opening of the recessed area 2022 is larger, so as to facilitate insertion of the raised area 2012 and can also play a guiding positioning effect.

Notwithstanding the above-mentioned embodiments have been shown and described, it is understood that the above-mentioned embodiments are exemplary and cannot be construed as the limitations of the present disclosure, and changes, modifications, substitutions and variations of the above-mentioned embodiments carried out by persons of ordinary skill in the art are within the protection scope of the present disclosure.

## Claims

1. An inter-module connection structure, comprising:
a first component (1) and a second component (2), wherein the first component (1) is provided with a first connecting part (11), the second component (2) is provided with a second connecting part (21), the first connecting part (11) and the second connecting part (21) are fitted together in plug-in or lap manner;
a connecting component (3), wherein the connecting component (3) passes through the first connecting part (11) and the second connecting part (21) to connect and fix the first component (1) and the second component (2), and the first component (1) and the second component (2), when in use, are constructed as a force-bearing component for bearing an acting force along a shear direction of the connecting component (3).

2. The inter-module connection structure according to claim 1, wherein the first component (1) is provided with a first support part (12), the first support part (12) is configured to stop against an end of the second connecting part (21) to achieve a top support between the first component (1) and the second component (2);
and/or, the second component (2) is provided with a second support part (22), the second support part (22) is configured to stop against an end of the first connecting part (11) to achieve a top support between the first component (1) and the second component (2).

3. The inter-module connection structure according to claim 1, wherein
the first component (1) is provided with a plurality of first connecting parts (11) spaced apart, the second component (2) is provided with a plurality of second connecting parts (21) spaced apart, the plurality of first connecting parts (11) are fitted in one-to-one correspondence to the plurality of second connecting parts (21) in plug-in or lap manner;
or,
the first component (1) is provided with one first connecting part (11), the first connecting part (11) extends for a set length along a length direction of a joint between the first component (1) and the second component (2), and is located in a middle part along the length direction of the joint, the second component (2) is provided with one second connecting part (21), the first connecting part (11) is fitted correspondingly to the second connecting part (21) in plug-in or lap manner.

4. The inter-module connection structure according to any one of claims 1 to 3, wherein the first connecting part (11) is a groove, the second connecting part (21) is a bulge part, and the bulge part is fitted to the groove in a plug-in manner.

5. The inter-module connection structure according to claim 4, wherein the groove comprises a first groove wall (111) and a second groove wall (112) arranged opposite to the first groove wall, the first groove wall (111) is provided with a first hole (113), the second groove wall (112) is provided with a second hole (114), and the connecting component (3) passes through the first hole (113) and the second hole (114), and is fitted to at least one of the first hole (113) and the second hole (114) in threaded connection manner.

6. The inter-module connection structure according to claim 5, wherein the first groove wall (111) is located outside the first component (1), the second groove wall (112) is located inside the first component (1), and an aperture of the first hole (113) is greater than an aperture of the second hole (114), so that the connecting component (3) passes through the first hole (113) and the second hole (114) successively.

7. The inter-module connection structure according to claim 6, wherein the connecting component (3) has a connecting rod part (31) and an end head part (32), a radial dimension of the end head part (32) is greater than a radial dimension of the connecting rod part (31), the connecting rod part (31) passes through the second connecting part (21) and is fitted into the second hole (114), and the end head part (32) is embedded in the first hole (113).

8. The inter-module connection structure according to claim 7, wherein the second connecting part (21) is provided with a third hole (211), the third hole (211) is a taper hole, the end head part (32) comprises a taper segment (321), and the taper segment (321) is fitted into the third hole (211).

9. The inter-module connection structure according to claim 7, wherein the connecting rod part (31) comprises a first rod segment (311) and a second rod segment (312), the second hole (114) comprises a first hole segment (1141) and a second hole segment (1142), the second hole segment (1142) is located between the first hole segment (1141) and the second connecting part (21), a hole wall of the first hole segment (1141) is provided with a thread, a hole wall of the second hole segment (1142) is a smooth hole wall, the first rod segment (311) is fitted into first hole segment (1141) in threaded connection manner, and the second rod segment (312) is fitted into the second hole segment (1142) in a plug-in manner.

10. The inter-module connection structure according to claim 9, wherein a radial dimension of the second hole segment (1142) is greater than a radial dimension of the first hole segment (1141), and a radial dimension of the second rod segment (312) is greater than a radial dimension of the first rod segment (311).

11. The inter-module connection structure according to claim 4, wherein a cross-sectional dimension of the bulge part gradually increases along a direction adjacent to the second component (2); and/or, a width dimension of the groove gradually decreases along a direction of a depth of the groove;
and/or,
an inner side of an end of at least one groove wall of the groove is an inclined surface or a curved surface; and/or, at least one side of an end of the bulge part is an inclined surface or a curved surface.

12. An energy storage power supply, comprising a plurality of modules (200) and the inter-module connection structure (100) according to any one of claims 1 to 11, wherein the plurality of modules (200) are stacked, and any two adjacent modules (200) are connected by the inter-module connection structure (100).

13. The energy storage power supply according to claim 12, wherein the plurality of modules (200) comprise at least one power management module (201) and at least one battery module (202).

14. The energy storage power supply according to claim 12, wherein the modules (200) comprise a side shell, a material of the side shell is a metal, and a side shell of one of two adjacent modules (200) forms the first component (1), and a side shell of the other of them forms the second component (2).

15. The energy storage power supply according to claim 12, wherein one module (200) of the two adjacent modules (200) is provided with a raised area (2012) in a middle part of a surface thereof at a connecting side of the two adjacent modules (200), and the other module (200) is provided with a recessed area (2022) in a middle part of surface thereof at the connecting side, and the raised area (2012) is embedded in the recessed area (2022) to achieve a pre-positioning between the two adjacent modules (200);
and/or,
at least part of a wall of the recessed area (2022) near its opening is an inclined surface; and/or, at least part of a surface of the raised area (2012) near its end is an inclined surface.
